# EUROPEAN PATENT APPLICATION

(11) **EP 4 678 566 A1**
(43) Date of publication of application: **14.01.2026**
(21) Application number: 23928803.8
(22) Date of filing: 22.12.2023
(51) Int. Cl.: B65G 1/137, G06Q 10/08

(54) **ARTICLE TRANSPORT FACILITY**

(30) Priority: 23.03.2023 JP 2023047073
(71) Applicant: DAIFUKU CO., LTD., Osaka-shi Osaka 555-0012 (JP)
(72) Inventor: OGAWA Tadasuke, Tokyo 105-0022 (JP); FUJITA Kouji, Tokyo 105-0022 (JP); MIYAMOTO Masaya, Tokyo 105-0022 (JP); KONAGAYA Toru, Gamo-gun, Shiga 529-1692 (JP); TAKEUCHI Akira, Gamo-gun, Shiga 529-1692 (JP); YOSHINAGA Kazuharu, Gamo-gun, Shiga 529-1692 (JP); UCHIDA Masayuki, Gamo-gun, Shiga 529-1692 (JP); NOGAMI Shohei, Gamo-gun, Shiga 529-1692 (JP); TAKAGI Daiki, Gamo-gun, Shiga 529-1692 (JP)
(74) Representative: Grosse, Felix Christopher
(86) International application number: PCT/JP2023/046084
(87) International publication number: WO 2024/195237

(57) **Abstract**

An article transport facility includes a work area in which a transfer operation is performed to transfer an article (G) supplied from an article supplier to a transport vehicle (1) and a managing device (5) that manages the transfer operation. A travel path (R) includes a stop position (P) at which the transport vehicle (1) stops to receive the article (G) in the transfer operation. The stop position (P) is adjacent to the work area. The managing device (5) causes the transport vehicle (1) to depart from the stop position (P) in response to a reading completion condition and a loaded condition being satisfied. The reading completion condition is satisfied when identification information of a transport target article (G) is read by a reader (51). The loaded condition is satisfied when an identifier (52) determines that the transport vehicle (1) holds the transport target article (G) based on an identification result.

## Description

### FIELD

The present invention relates to an article transport facility including a transport vehicle that travels along a predetermined travel path to transport an article, an article supplier that supplies the article to be transported by the transport vehicle, and a work area in which a transfer operation is performed to transfer the article supplied from the article supplier to the transport vehicle.

### BACKGROUND

Such an article transport facility is typically a part of a distribution system. For example, Japanese Unexamined Patent Application Publication No. 2016-113291 (Patent Literature 1) describes a sorting device for sorting articles in a distribution system. Reference signs in parentheses used hereafter in describing the background are the reference signs in

### Patent Literature 1.

A facility described in Patent Literature 1 includes an upper area (A) and a lower area (B). The upper area (A) includes a travel path (4) extending on a plane, transport vehicles (12) that autonomously travel along the travel path (4), an article supplier (6), and multiple openings (8a). In the upper area (A), the transport vehicles (12) transport articles supplied from the article supplier (6) to specified openings (8a) to drop the articles through the openings (8a). The articles dropped through the openings (8a) are received in shipment containers (20) disposed in the lower area (B) for sorting.

### CITATION LIST

### PATENT LITERATURE

Patent Literature 1: Japanese Unexamined Patent Application Publication No. 2016-113291

### BRIEF SUMMARY

### TECHNICAL PROBLEM

In the facility described in Patent Literature 1, articles allocated to each sorting destination are transferred to the corresponding transport vehicles (12) in the article supplier (6) through a transfer operation performed by an operator. However, Patent Literature 1 includes no detailed reference to the operation of transferring articles to the transport vehicles (12) or the operation of the transport vehicles (12) receiving articles. For example, articles not to be transported can erroneously be transferred to the transport vehicles. In another example, the operations (stopping or departing) of the transport vehicles may not match the operation of transferring articles performed by the operator, and fail to smoothly transfer the articles to the transport vehicles. In such a case, the facility may have difficulty in managing the entire article transportation.

Under such circumstances, an article transport facility that can appropriately manage article transportation is awaited.

### SOLUTION TO PROBLEM

An article transport facility includes a transport vehicle that travels along a predetermined travel path to transport an article, an article supplier that supplies the article to be transported by the transport vehicle, a work area in which a transfer operation is performed to transfer the article supplied from the article supplier to the transport vehicle, and a managing device that manages the transfer operation. The travel path includes a stop position at which the transport vehicle stops to receive the article in the transfer operation. The stop position is adjacent to the work area. The managing device includes a reader that reads identification information of the article supplied from the article supplier, and an identifier that identifies a holding state of the article on the transport vehicle stopped at the stop position. The managing device causes the transport vehicle to depart from the stop position in response to a reading completion condition and a loaded condition being satisfied. The reading completion condition is satisfied when the identification information of a transport target article is read by the reader. The loaded condition is satisfied when the identifier determines that the transport vehicle holds the transport target article.

In this structure, the managing device that manages the operation of transferring articles in the work area cause the transport vehicle to depart from the stop position in response to the reading completion condition and the loaded condition being satisfied. The reading completion condition is satisfied when the identification information of a transport target article is read. The loaded condition is satisfied when the transport vehicle holds the transport target article. The structure can avoid erroneous transfer of an article other than a transport target article to the transport vehicle, as well as departure of the transport vehicle not holding an article. The facility with this structure can thus appropriately manage the entire article transportation.

Further features and advantageous effects of the technique according to the disclosure will be apparent from exemplary and nonlimiting embodiments described below with reference to the drawings.

### BRIEF DESCRIPTION OF DRAWINGS

FIG. 1 is a plan view of an article transport facility.
FIG. 2 is a side view of a work area.
FIG. 3 is a control block diagram.
FIG. 4 is a timing chart of an individual transport mode.
FIG. 5 is a timing chart of a collective transport mode.
FIG. 6 is a diagram describing foreign object determination performed by an identifier.
FIG. 7 is a flowchart of a process performed before a transport vehicle departure.

### DETAILED DESCRIPTION

An article transport facility according to an embodiment will be described below with reference to the drawings.

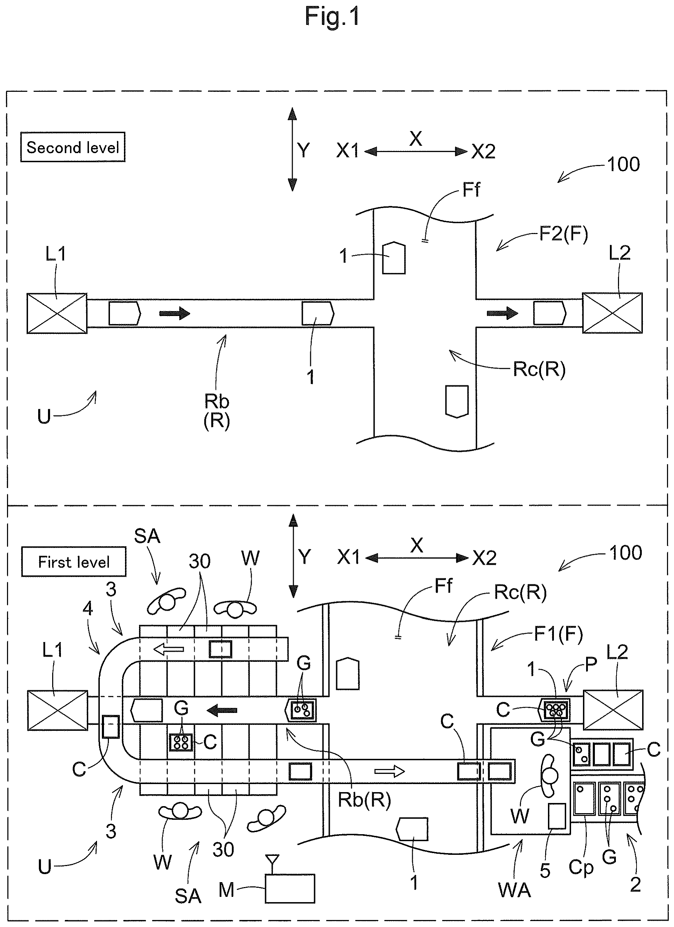

As shown in FIG. 1, an article transport facility 100 includes transport vehicles 1 that travel along a predetermined travel path R to transport articles G, an article supplier 2 that supplies articles G to be transported by the transport vehicles 1, and a work area WA in which the articles G supplied from the article supplier 2 are transferred to the transport vehicles 1 (hereafter, this operation is simply referred to as a transfer operation). In the present example, the article transport facility 100 includes article receivers 3 that receive the articles G transported by the transport vehicles 1, and sorting areas SA in which a sorting operation is performed to sort the articles G received by the article receivers 3.

In the present embodiment, the article transport facility 100 includes a first travel floor F1 that is a travel floor F on the first level, a second travel floor F2 that is a travel floor F on the second level, and a first lifter L1 and a second lifter L2 that raise or lower the transport vehicles 1 between the first travel floor F1 and the second travel floor F2. The first lifter L1 and the second lifter L2 are spaced apart from each other horizontally.

In the present embodiment, the first level and the second level are adjacent to each other vertically. The second level is disposed above the first level. More specifically, the second travel floor F2 is disposed above the first travel floor F1. In the present example, the first travel floor F1 alone includes the article supplier 2, the work area WA, the article receivers 3, and the sorting areas SA. In another example, the article supplier 2, the work area WA, the article receivers 3, and the sorting areas SA may also be disposed on the second travel floor F2.

Each of the first travel floor F1 and the second travel floor F2 includes an inter-lifter path Rb connecting the first lifter L1 to the second lifter L2. The transport vehicles 1 can move between the first lifter L1 and the second lifter L2 by traveling along the inter-lifter path Rb. The inter-lifter path Rb is included in the travel path R.

Hereafter, the direction in which the inter-lifter path Rb extends is referred to as an X-direction, and the direction orthogonal to the X-direction when viewed vertically is referred to as a Y-direction. One side in the X-direction is referred to as a first X-direction X1, and the opposite side is referred to as a second X-direction X2.

In the present embodiment, the first lifter L1, the second lifter L2, the inter-lifter path Rb on the first travel floor F1, and the inter-lifter path Rb on the second travel floor F2 are included in a transport unit U. In other words, the transport unit U includes the first lifter L1, the second lifter L2, and the inter-lifter path Rb connecting the lifters (L1 and L2) on each travel floor F.

In the present embodiment, the article transport facility 100 includes multiple transport units U, although not illustrated in detail. The multiple transport units U are arranged in the Y-direction. In the present example, the inter-lifter path Rb included in one transport unit U and the inter-lifter path Rb included in another transport unit U are connected by a connection path Rc in the Y-direction. The transport vehicles 1 travel along the connection path Rc to move between the inter-lifter paths Rb. The connection path Rc is included in the travel path R.

In the present embodiment, the article transport facility 100 includes a control device M that controls transportation of the articles G in the entire facility. The control device M controls the multiple transport vehicles 1. The control device M controls each transport vehicle 1 with, for example, a transport command or a standby command. The transport command specifies the transport source and the transport destination of each article G. The transport vehicle 1 that has received the transport command receives an article G at the specified transport source and transports the article G to the specified transport destination. The standby command specifies a standby location. The transport vehicle 1 that has received the standby command travels to the specified standby location, and waits at the standby location until the transport vehicle 1 receives, for example, a subsequent command.

The transport vehicles 1 autonomously travel over travel surfaces Ff on the first travel floor F1 and the second travel floor F2. For example, each transport vehicle 1 includes a battery (power storage) and operates using power stored in the battery as a driving source. The article transport facility 100 includes a charging station (not shown), at which the transport vehicles 1 can charge when the battery level is low.

In the present embodiment, each travel floor F includes position information holders holding position information at multiple positions, although not illustrated in detail. Each position information holder holds address information indicating its position. Each transport vehicle 1 includes a detector (not shown) to detect the position information holders. The detector detects any of the position information holders to identify the current position of the transport vehicle 1 at the detection. Each transport vehicle 1 travels to an intended location while sequentially reading the multiple position information holders. For example, the position information holder may be a one-dimensional code or a two-dimensional code holding identification information. In another example, the position information holder may be a radio frequency identification (RFID) tag holding identification information.

As described above, the article transport facility 100 includes the article supplier 2 that supplies articles G to the transport vehicles 1 and the article receivers 3 that receive the articles G transported by the transport vehicles 1. The work area WA is disposed adjacent to the article supplier 2. In the work area WA, the transfer operation is performed to transfer the articles G supplied from the article supplier 2 to the transport vehicles 1. The sorting areas SA are arranged adjacent to the article receivers 3. In the sorting areas SA, a sorting operation is performed to sort the articles G received by the article receivers 3.

The work area WA is disposed adjacent to each inter-lifter path Rb on the first travel floor F1 (FIG. 1 simply shows one inter-lifter path Rb). The article transport facility 100 includes the same number of work areas WA as the inter-lifter paths Rb.

Each article G supplied from the article supplier 2 to the transport vehicles 1 is contained in a container C or not contained in any container. In the present embodiment, the article supplier 2 supplies, to the work area WA, each article G contained in a supply container Cp. In the work area WA, the transfer operation is performed to pick up the article G in the supply container Cp and transfer the article G to the transport vehicle 1 waiting in the inter-lifter path Rb. More specifically, in the present embodiment, each article G transferred to the transport vehicle 1 may be an article G in a container C different from the supply container Cp or an article G not in the container C or any other container. Through this transfer operation, articles G are supplied from the article supplier 2 to the transport vehicles 1. In the present embodiment, the transfer operation in the work area WA is performed by an operator W. In some embodiments, the transfer operation may be performed not by the operator W but by a robot, or by both the operator W and a robot.

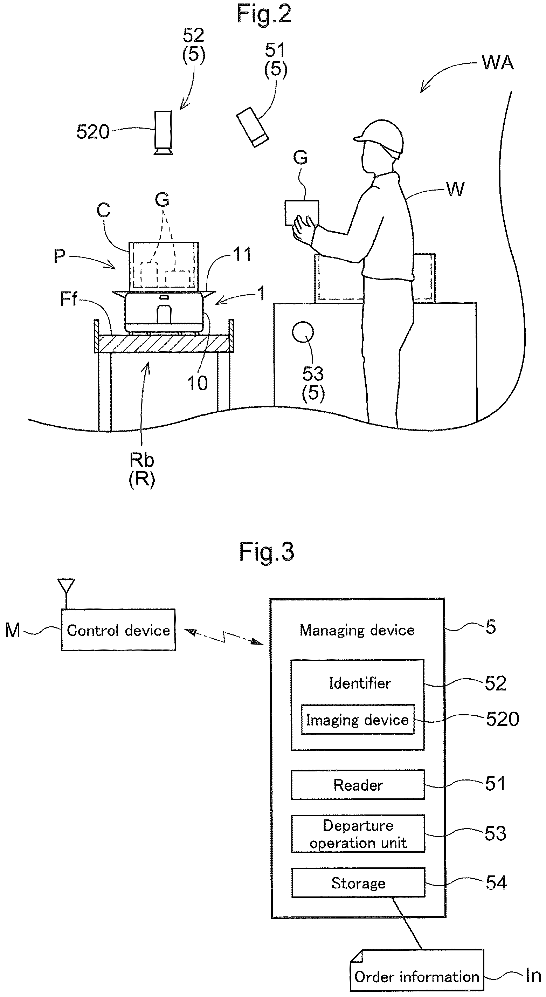

In the work area WA, the transfer operation is performed based on predetermined order information In (refer to FIG. 3). The order information In includes article type information and article quantity information. More specifically, the type and the quantity of articles G to be transferred to each transport vehicle 1 are determined based on the order information In. The transfer operation is performed based on the order information In. The order information In may include other information, such as client information or transport destination information.

The article transport facility 100 includes managing devices 5 that manage the transfer operation in the work areas WA. Each managing device 5 is disposed for the corresponding work area WA. Each managing device 5 manages the transfer operation performed in the work area WA to which the managing device 5 is assigned. The managing devices 5 manage the transfer operation based on the predetermined order information In (refer to FIG. 3). This management will be described in detail later.

Each transport vehicle 1 transports an article G or a container C containing an article G. More specifically, each transport vehicle 1 transports, to any of the article receivers 3, an article G or a container C containing an article G transferred in the transfer operation performed in the work area WA.

The article receivers 3 are spaced from the work area WA and arranged adjacent to the inter-lifter path Rb in the Y-direction. In the present example, the article receivers 3 are arranged on both sides of the inter-lifter path Rb in the Y-direction.

In the present embodiment, each article receiver 3 includes multiple transporters 30 arranged in the X-direction. Each transporter 30 transports articles G or containers C containing articles G received from the transport vehicles 1 in the Y-direction. Each transporter 30 includes, for example a conveyor or a chute.

As described above, the sorting areas SA are arranged adjacent to the article receivers 3. The articles G or the containers C containing articles G transported outward in the Y-direction by the transporters 30 in each article receiver 3 are transported to the sorting areas SA. More specifically, each transport vehicle 1 transports an article G or the container C containing an article G received at the article supplier 2 to any of the sorting areas SA. In the present example, each transport vehicle 1 transports an article G or the container C containing an article G received at the article supplier 2 to any of the sorting areas SA using the transporters 30 in the article receivers 3.

In the present embodiment, when the transport vehicles 1 transport articles G in containers C to any of the sorting areas SA, a picking-up operation is performed in the sorting area SA to pick up articles G from the containers C. More specifically, the sorting operation includes the picking-up operation to pick up articles G from the containers C transported by the transport vehicles 1. In the present embodiment, the sorting operation (including the picking-up operation) in the sorting area SA is performed by an operator W. Instead of the operator W, the sorting operation may be performed by a robot, or by both the operator W and a robot.

The articles G sorted in each sorting area SA are transferred out of the sorting area SA by a transfer conveyor (not shown) and transported to the location at which, for example, the subsequent process is performed.

In the picking-up operation performed in the sorting areas SA, the articles G are separated from the containers C, with empty containers C being left. In the present embodiment, an empty-container collecting conveyor 4 that collects empty containers C resulting from the picking-up operation in the sorting areas SA is disposed on the travel floor F (first travel floor F1 in this example) on which the article receivers 3 are arranged.

The empty-container collecting conveyor 4 extends to a position adjacent to the work area WA. In the present embodiment, the empty-container collecting conveyor 4 extends into the work area WA. The empty containers C collected by the empty-container collecting conveyor 4 are transported to the work area WA for reuse in the operation in the work area WA.

After transferring an article G to the sorting area SA (article receiver 3) on the first travel floor F1, each transport vehicle 1 rides on the first lifter L1 up to the second travel floor F2. The transport vehicle 1 then travels on the second travel floor F2 and rides on the second lifter L2 back to the first travel floor F1. The transport vehicle 1 back on the first travel floor F1 receives, in the same manner as described above, an article G in the work area WA (article supplier 2), and transports the article G to the sorting area SA (article receiver 3).

In the present embodiment, the inter-lifter path Rb on the first travel floor F1 and the inter-lifter path Rb on the second travel floor F2 are parallel to each other, and allow the transport vehicles 1 to travel oppositely in the X-direction.

In the present embodiment, the transport vehicles 1 travel along the inter-lifter path Rb on the first travel floor F1 in the first X-direction X1. The transport vehicles 1 travel along the inter-lifter path Rb on the second travel floor F2 in the second X-direction X2.

In the present embodiment, the first lifter L1 raises the transport vehicles 1. More specifically, the first lifter L1 moves the transport vehicles 1 from the first travel floor F1 to the second travel floor F2.

In the present embodiment, the second lifter L2 lowers the transport vehicles 1. More specifically, the second lifter L2 moves the transport vehicles 1 from the second travel floor F2 to the first travel floor F1.

In the present embodiment, each transport vehicle 1 exits the descending second lifter L2 to the first travel floor F1 and receives an article G in the work area WA. The transport vehicle 1 holding the article G then travels along the inter-lifter path Rb on the first travel floor F1 in the first X-direction X1 and transfers the article G in the sorting area SA. The transport vehicle 1 then moves into the first lifter L1 from the first travel floor F1 to ascend to the second travel floor F2. The transport vehicle 1 exits the ascending first lifter L1 to the second travel floor F2 and travels along the inter-lifter path Rb on the second travel floor F2 in the second X-direction X2. The transport vehicle 1 then moves into the second lifter L2 to descend to the first travel floor F1. In this manner, the transport vehicles 1 circulate through the first travel floor F1 and the second travel floor F2.

The management of the transfer operation in the work area WA will now be described. FIG. 2 is a side view of the work area WA. FIG. 3 is a control block diagram of the article transport facility 100.

As shown in FIG. 2, the travel path R includes a stop position P adjacent to the work area WA. At the stop position P, the transport vehicles 1 stop to receive articles G in the transfer operation. Although not shown in detail, the position information storage described above is disposed at the stop position P. Each transport vehicle 1 stops at the stop position P while reading the position information storage disposed at the stop position P. In the present embodiment, the work area WA is adjacent to the inter-lifter path Rb, and the stop position P for the transport vehicles 1 is set on the inter-lifter path Rb. More specifically, in the present embodiment, the inter-lifter path Rb corresponds to a travel path.

In the present embodiment, each transport vehicle 1 includes a cart body 10 and an article supporter 11 that supports articles G. The cart body 10 enables traveling of the transport vehicle 1. In the present example, the cart body 10 includes the battery described above, an electric motor connected to the battery, wheels driven by the electric motor, and a vehicle body supporting these components. The article supporter 11 is disposed on the upper surface of the cart body 10. In the transfer operation in the work area WA, each article G is placed on the article supporter 11 of the transport vehicle 1 stopped at the stop position P.

As shown in FIGs. 2 and 3, the managing device 5 includes a reader 51 that reads identification information of the article G supplied from the article supplier 2 (refer to FIG. 1) and an identifier 52 that identifies the holding state of the article G on the transport vehicle 1 stopped at the stop position P. In the present embodiment, the managing device 5 further includes a departure operation unit 53 operable by the operator W in the work area WA.

In the present embodiment, each article G has an identification code holding its identification information attached to the article G. The reader 51 reads the identification code attached to the article G. The identification code is, for example, a one-dimensional code or a two-dimensional code.

In the present embodiment, the identifier 52 includes an imaging device 520 that captures an image of the article supporter 11 of the transport vehicle 1 stopped at the stop position P. In the present example, the imaging device 520 is disposed above the stop position P to capture an image of the transport vehicle 1 stopped at the stop position P from above.

The departure operation unit 53 includes, for example, a button or a lever. In the illustrated example, the departure operation unit 53 includes a button.

In the present embodiment, as shown in FIG. 3, the managing device 5 includes a storage 54 that stores the order information In. The managing device 5 reads the order information In from the storage 54, and manages the transfer operation in the work area WA based on the order information In.

The control device M can communicate with the managing device 5 disposed in each work area WA in a wired or wireless manner. The managing device 5 manages the transfer operation in the corresponding work area WA based on a command from the control device M.

In the present embodiment, the control device M enables multiple transport modes. The multiple transport modes include an individual transport mode in which each transport vehicle 1 transports one article G at a time, and a collective transport mode in which each transport vehicle 1 collectively transports multiple articles G. The managing device 5 manages the transfer operation in the work area WA in the transport mode specified by the control device M.

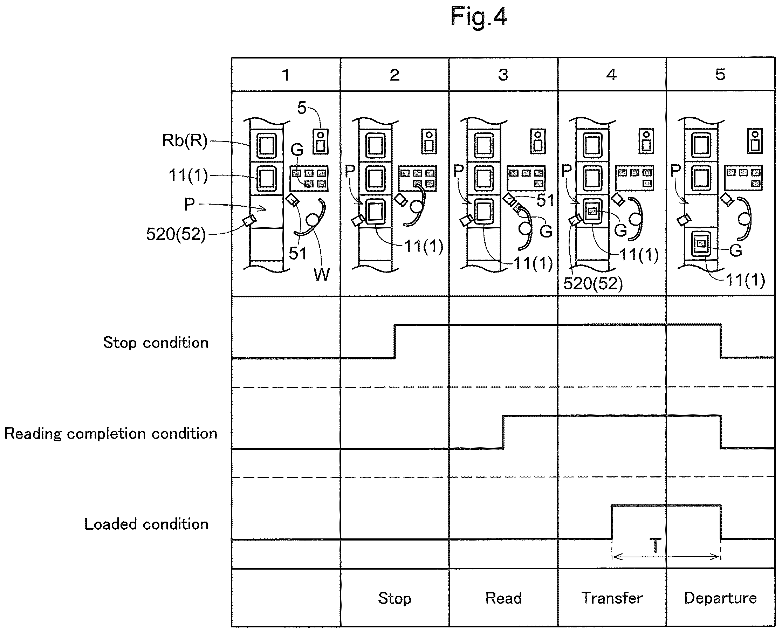

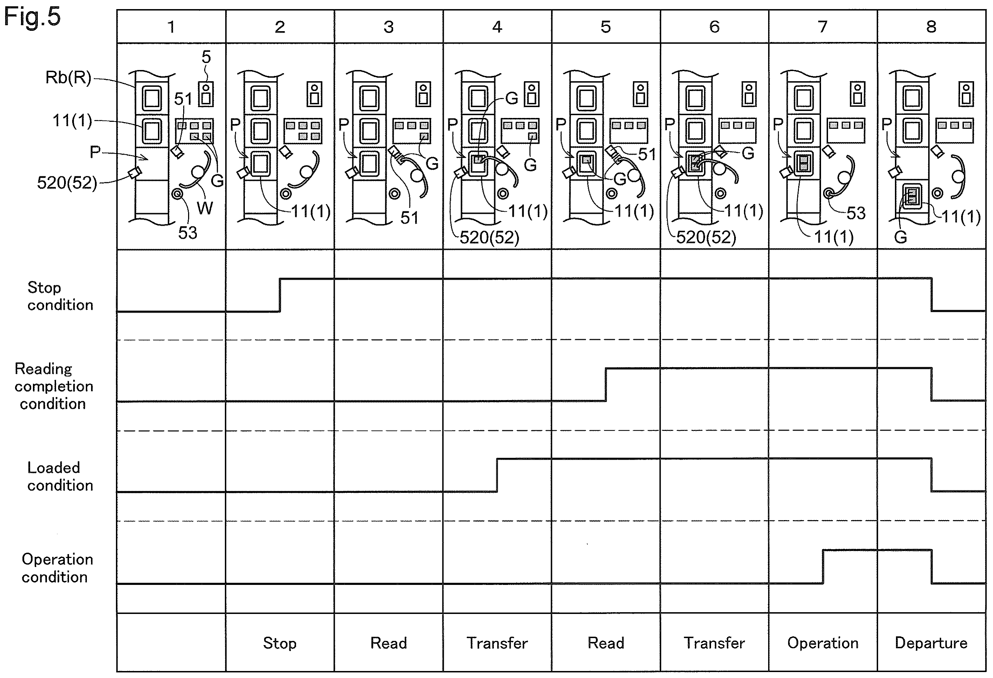

FIG. 4 is a diagram describing the individual transport mode. FIG. 5 is a diagram describing the collective transport mode.

The individual transport mode will be described first with reference to FIG. 4.

The managing device 5 cause the transport vehicle 1 to depart from the stop position P when a reading completion condition and a loaded condition are satisfied. The reading completion condition is satisfied when the identification information of a transport target article G, or specifically, an article G to be transported by the transport vehicle 1, is read by the reader 51. The loaded condition is satisfied when the transport vehicle 1 is determined to be holding the transport target article G based on an identification result from the identifier 52.

In the present embodiment, when a transport vehicle 1 stops at the stop position P (a stop condition being satisfied), the managing device 5 allows the reader 51 to read the identification information. The managing device 5 then cause the transport vehicle 1 to depart from the stop position P when, in addition to the reading completion condition and the loaded condition being satisfied, an elapsed time condition is satisfied. The elapsed time condition is satisfied when a predetermined set time T has passed after the reading completion condition and the loaded condition are both satisfied.

FIG. 4 shows the timings at which the stop condition, the reading completion condition, the loaded condition, and the elapsed time condition are satisfied for each of five phases in the individual transport mode. These conditions are preconditions for the transport vehicle 1 to depart in the individual transport mode. More specifically, in the individual transport mode, the transport vehicle 1 departures from the stop position P when all the preconditions, or the stop condition, the reading completion condition, the loaded condition, and the elapsed time condition, are satisfied.

In the first phase, no transport vehicle 1 traveling along the travel path R has reached the stop position P. More specifically, no transport vehicle 1 to which the transport target article G is to be transferred is at the stop position P.

In the second phase, a transport vehicle 1 has reached the stop position P and stops at the stop position P (stop phase). The stop condition is thus satisfied. In the individual transport mode, the reader 51 is allowed to read the identification information of the transport target article G when the stop condition is satisfied. More specifically, in the individual transport mode, any reading of the identification information of the transport target article G performed by the reader 51 before the stop condition is satisfied is invalid.

In the third phase, the reader 51 reads the identification information of the transport target article G (reading phase). The reading completion condition is thus satisfied. As described above, the reader 51 reads the identification code attached to the transport target article G.

In the fourth phase, the transport target article G is transferred to the transport vehicle 1 (transfer phase). The loaded condition is thus satisfied. More specifically, the transferred transport target article G is held by the transport vehicle 1. Thus, the transport target article G is imaged by the imaging device 520 and identified by the identifier 52. More specifically, the identifier 52 identifies the transport target article G held by the transport vehicle 1. In the fourth phase, the three preconditions, or the stop condition, the reading completion condition, and the loaded condition, are satisfied. In the present embodiment, the transport target article G held by the transport vehicle 1 refers to the transport target article G placed on the article supporter 11 in the transport vehicle 1.

In the present embodiment, when the managing device 5 determines that the transport vehicle 1 is holding the transport target article G incorrectly based on the identification result from the identifier 52, the managing device 5 informs the operator W in the work area WA of the incorrect holing of the transport target article G. Thus, the operator W that has received the information can have the opportunity of causing the transport vehicle to correctly hold the transport target article G.

In the fifth phase, the transport vehicle 1 departures (departure phase). In the fifth phase, a set time T has passed since the stop condition, the reading completion condition, and the loaded condition are satisfied in the fourth phase. The elapsed time condition is thus satisfied, and all the preconditions to be satisfied in the individual transport mode are satisfied. When all the preconditions are satisfied, the transport vehicle 1 holding the transport target article G departures from the stop position P.

The collective transport mode will now be described with reference to FIG. 5.

In the collective transport mode, the managing device 5 cause the transport vehicle 1 to depart from the stop position P when an operation condition is satisfied in addition to the reading completion condition and the loaded condition. The operation condition is satisfied when the departure operation unit 53 is operated.

FIG. 5 shows the timings at which the stop condition, the reading completion condition, the loaded condition, the elapsed time condition, and the operation condition are satisfied for each of eight phases in the collective transport mode. These conditions are preconditions for the transport vehicle 1 to depart in the collective transport mode. More specifically, in the collective transport mode, the transport vehicle 1 departures from the stop position P when all the preconditions, or the stop condition, the reading completion condition, the loaded condition, the elapsed time condition, and the operation condition, are satisfied. FIG. 5 is a diagram of an example of two transport target articles G allocated to one transport vehicle 1 in the collective transport mode.

In the first phase, no transport vehicle 1 traveling along the travel path R has reached the stop position P. More specifically, no transport vehicle 1 to which the transport target articles G are to be transferred is at the stop position P.

In the second phase, a transport vehicle 1 has reached the stop position P, and stops at the stop position P (stop phase). The stop condition is thus satisfied. In the collective transport mode, the identification information of transport target articles G can be read by the reader 51 before the stop condition is satisfied. More specifically, the reader 51 can read the identification information of transport target articles G at any time in the collective transport mode, unlike in the individual transport mode. In the collective transport mode, before a transport vehicle 1 stops at the stop position P, the reader 51 can start reading the identification information of the transport target articles G allocated to the transport vehicle 1, and can thus finish reading the identification information items of all the transport target articles G allocated to the transport vehicle 1 earlier.

In the third phase, the reader 51 reads the identification information of a transport target article G (reading phase). In the collective transport mode, multiple transport target articles G are allocated to one transport vehicle 1. Thus, although the reader 51 reads a first one of the multiple transport target articles G, the reading completion condition remains unsatisfied. When all the transport target articles G allocated to one transport vehicle 1 are read by the reader 51, the reading completion condition is satisfied. The managing device 5 determines whether the reading completion condition is satisfied in the collective transport mode based on the article quantity information in the order information In.

In the fourth phase, the transport target article G is transferred to the transport vehicle 1 (transfer phase). The loaded condition is thus satisfied. More specifically, the transferred transport target article G is held by the transport vehicle 1. Thus, the transport target article G is imaged by the imaging device 520 and identified by the identifier 52. More specifically, the transport target article G held by the transport vehicle 1 is identified by the identifier 52.

In the present embodiment, the identifier 52 simply identifies any transport target article G on the article supporter 11 in the transport vehicle 1. Thus, when at least one transport target article G is held by the article supporter 11 in the transport vehicle 1, this state is identified by the identifier 52. The loaded condition is then satisfied.

In the fifth phase, the reader 51 reads the identification information of the final one of the multiple transport target articles G allocated to the transport vehicle 1 (reading phase). In this state, the identification information items of all the transport target articles G allocated to the transport vehicle 1 are read, and the reading completion condition is satisfied.

In the sixth phase, the final one of the multiple transport target articles G allocated to the transport vehicle 1 is transferred to the transport vehicle 1 (transfer phase). Thus, all the transport target articles G allocated to the transport vehicle 1 are held by the transport vehicle 1. In the present embodiment, as described above, when the first one of the transport target articles G allocated to the transport vehicle 1 is transferred to the transport vehicle 1, the loaded condition is satisfied.

In the seventh phase, the operator W operates the departure operation unit 53 (operation phase). The operation condition is thus satisfied, and all the preconditions to be satisfied in the collective transport mode are thus satisfied. More specifically, in the seventh phase, all the preconditions, or the stop condition, the reading completion condition, the loaded condition, and the operation condition, are satisfied.

In the eighth phase, the transport vehicle 1 departures (departure phase). After all the preconditions are satisfied, the transport vehicle 1 holding the transport target articles G departures from the stop position P.

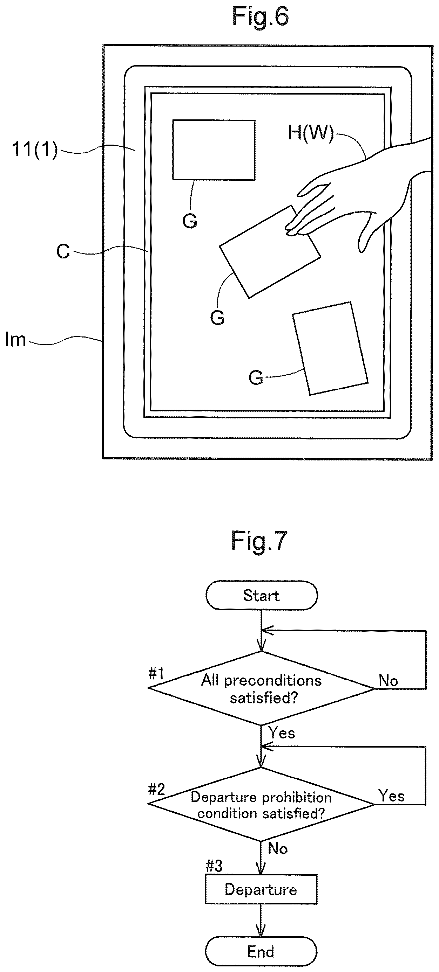

In the present embodiment, as shown in FIG. 6, the identifier 52 performs image recognition on the image captured by the imaging device 520, and determines whether the article supporter 11 supports any foreign object H other than the articles G. When the identifier 52 determines that any foreign object H is on the article supporter 11 (departure prohibition condition), the managing device 5 prohibits the transport vehicle 1 from departing.

FIG. 6 shows an image Im captured by the imaging device 520. In the present embodiment, the identifier 52 determines an object protruding out of the captured image Im (cropped out object) as a foreign object H. In the illustrated example, the object protruding out of the captured image Im is the hand of the operator W. In this case, the identifier 52 determines the hand of the operator W as a foreign object H, and the managing device 5 determines that the departure prohibition condition is satisfied to prohibit the transport vehicle 1 from depart.

In the present embodiment, as shown in FIG. 7, the managing device 5 cause the transport vehicle 1 to depart from the stop position P when all the preconditions are satisfied and the departure prohibition condition is not satisfied.

More specifically, the managing device 5 determines whether all the preconditions are satisfied (step #1). When determining that all the preconditions are satisfied (Yes in step #1), the managing device 5 determines whether the departure prohibition condition is satisfied (step #2). When determining that the departure prohibition condition is not satisfied (No in step #2), the managing device 5 cause the transport vehicle 1 to depart from the stop position P (step #3). When the departure prohibition condition is satisfied (Yes in step #2), the managing device 5 may repeatedly determines whether the departure prohibition condition is satisfied as shown in FIG. 7 or may inform, for example, the operator W or the control device M that the departure prohibition condition is satisfied.

### Other Embodiments

Other embodiments will now be described.
(1) In the above embodiment, the departure operation unit 53 includes a button. In some embodiments, the departure operation unit 53 may include, for example, an icon displayed on a monitor or a touchscreen.
(2) In the above embodiment, the identifier 52 determines an object protruding out of the captured image Im as a foreign object H. In some embodiments, the identifier 52 may determine, for example, an object moving in the captured image Im as a foreign object H. In another example, the identifier 52 may identify the shape, the size, or the color of a predetermined transport target article G, and may determine an object having a shape, a size, or a color different from those of the predetermined transport target article G as a foreign object H.
(3) In the above embodiment, the identifier 52 simply identifies any transport target article G being on the article supporter 11 in the transport vehicle 1. When at least one transport target article G is held by the article supporter 11 in the transport vehicle 1, the identifier 52 identifies the holding state, and the loaded condition is satisfied. In some embodiments, the identifier 52 may identify all the transport target articles G allocated to one transport vehicle 1 being held by the article supporter 11 in the transport vehicle 1. In this case, after all the transport target articles G allocated to one transport vehicle 1 are held by the article supporter 11 in the transport vehicle 1, the loaded condition is satisfied.
(4) In the above embodiment, the identifier 52 includes the imaging device 520 that captures an image of the article supporter 11 in the transport vehicle 1 stopped at the stop position P. In some embodiments, in place of or in addition to the imaging device 520, the identifier 52 may include various other sensors such as a laser sensor for detecting any article G or a weight sensor for detecting the weight of any article G. In this case, the identifier 52 may identify the transport target article G supported on the article supporter 11 in the transport vehicle 1 based on the detection result from the laser sensor or the weight sensor.
(5) In the above embodiment, when determining that the transport vehicle 1 is not holding a transport target article G, the managing device 5 informs the operator W in the work area WA that the transport vehicle 1 is not holding a transport target article G. In some embodiments, when determining that the transport vehicle 1 is not holding a transport target article G, the managing device 5 may inform, for example, the control device M that the transport vehicle 1 is not holding a transport target article G.
(6) In the above embodiment, in the individual transport mode, the transport target article G is transferred to the transport vehicle 1 after the identification information is read by the reader 51. In some embodiments, the reader 51 may read the identification information from the transport target article G placed on the article supporter 11 in the transport vehicle 1 after the transport target article G is transferred to the transport vehicle 1. In this case, after the loaded condition is satisfied, the reading completion condition is satisfied with the identification information being read by the reader 51. The reader 51 in this case may include a reader capable of reading an identification code attached to the transport target article G at a distance. Such a reader may be disposed, for example, above the transport vehicle 1 stopped at the stop position P to read the identification information from the transport target article G placed on the article supporter 11.
(7) The structure described in each of the above embodiments may be combined with any other structures described in the other embodiments unless any contradiction arises. For other structures as well, the embodiments described herein are merely illustrative in all aspects. Thus, the embodiments described herein may be modified variously as appropriate without departing from the spirit and scope of the disclosure.

### Overview of Present Embodiment

An overview of the article transport facility according to the embodiments described above is provided below.

An article transport facility includes a transport vehicle that travels along a predetermined travel path to transport an article, an article supplier that supplies the article to be transported by the transport vehicle, a work area in which a transfer operation is performed to transfer the article supplied from the article supplier to the transport vehicle, and a managing device that manages the transfer operation. The travel path includes a stop position at which the transport vehicle stops to receive the article in the transfer operation. The stop position is adjacent to the work area. The managing device includes a reader that reads identification information of the article supplied from the article supplier, and an identifier that identifies a holding state of the article on the transport vehicle stopped at the stop position. The managing device causes the transport vehicle to depart from the stop position in response to a reading completion condition and a loaded condition being satisfied. The reading completion condition is satisfied when the identification information of a transport target article is read by the reader. The loaded condition is satisfied when the identifier determines that the transport vehicle holds the transport target article.

In this structure, the managing device that manages the operation of transferring articles in the work area cause the transport vehicle to depart from the stop position in response to the reading completion condition and the loaded condition being satisfied. The reading completion condition is satisfied when the identification information of a transport target article is read. The loaded condition is satisfied when the transport vehicle holds the transport target article. The structure can avoid erroneous transfer of an article other than a transport target article to the transport vehicle, as well as departure of the transport vehicle not holding an article. The facility with this structure can thus appropriately manage the entire article transportation.

The transfer operation may be performed by an operator. In response to the identifier determining that the transport vehicle is holding the transport target article incorrectly, the managing device may inform the operator in the work area that the transport vehicle is holding the transport target article incorrectly.

In this structure, the operator is informed of any incorrect holding of the transport target article on the transport vehicle. This allows the operator receiving the information to have the opportunity of causing the transport vehicle to correctly hold the transport target article.

The managing device may allow the reader to read the identification information in response to the transport vehicle stopping at the stop position. The managing device may cause the transport vehicle to depart from the stop position in response to the reading completion condition, the loaded condition, and an elapsed time condition being satisfied. The elapsed time condition is satisfied when a predetermined set time has passed after the reading completion condition and the loaded condition are both satisfied.

In this structure, the condition for the reader to read the identification information of the article is that the transport vehicle is stopped at the stop position to receive the article. Thus, the transport target article to be transported by the transport vehicle stopped at the stop position can be easily transferred to the transport vehicle appropriately. When the reading completion condition and the loaded condition are satisfied and the set time elapses after these conditions are satisfied, the transport vehicle automatically departures from the stop position without being operated by an operator for the departure. This structure can thus easily enhance the efficiency of transporting articles.

The transfer operation may be performed by an operator. The managing device may further include a departure operation unit operable by the operator in the work area. The managing device may cause the transport vehicle to depart from the stop position in response to the reading completion condition, the loaded condition, and an operation condition being satisfied. The operation condition is satisfied when the departure operation unit has been operated.

In this structure, the transport vehicle departures when the operator operates the departure operation unit and other conditions are satisfied. Thus, the operator can control the timing of departing the transport vehicle. This structure may be suitable for, for example, transporting multiple transport target articles on the transport vehicle at a time. When the transport vehicle receives transport target articles one by one and holds multiple transport target articles, the operator may operate the departure operation unit cause the transport vehicle to depart.

The transport vehicle may include an article supporter that supports the article. The identifier may include an imaging device that images the article supporter in the transport vehicle stopped at the stop position. The identifier may determine whether a foreign object other than the article is on the article supporter through image recognition of an imaging result provided from the imaging device. In response to the identifier determining that the foreign object is on the article supporter, the managing device may prohibit the transport vehicle from departing.

This structure easily allows the transport vehicle to appropriately transport the transport target article. Although the identifier can identify, for example, the hand of the operator as a foreign object, the structure prohibits the transport vehicle from departing also in this case. The safety of the operator can thus be increased easily.

### INDUSTRIAL APPLICABILITY

The technique according to one or more embodiments of the disclosure can be used for an article transport facility including a transport vehicle that travels along a predetermined travel path to transport an article, an article supplier that supplies the article to be transported by the transport vehicle, and a work area in which a transfer operation is performed to transfer the article supplied from the article supplier to the transport vehicle.

### REFERENCE SIGNS LIST

100 article transport facility
1 transport vehicle
11 article supporter
2 article supplier
5 managing device
51 reader
52 identifier
520 imaging device
53 departure operation unit
R travel path
P stop position
WA work area
W operator
G article
H foreign object
T set time

## Claims

1. An article transport facility, comprising:
a transport vehicle configured to travel along a predetermined travel path to transport an article;
an article supplier configured to supply the article to be transported by the transport vehicle;
a work area in which a transfer operation is performed to transfer the article supplied from the article supplier to the transport vehicle; and
a managing device configured to manage the transfer operation,
the travel path including a stop position at which the transport vehicle stops to receive the article in the transfer operation, the stop position being adjacent to the work area,
the managing device including
a reader configured to read identification information of the article supplied from the article supplier, and
an identifier configured to identify a holding state of the article on the transport vehicle stopped at the stop position,
the managing device being configured to cause the transport vehicle to depart from the stop position in response to a reading completion condition and a loaded condition being satisfied, the reading completion condition being satisfied when the identification information of a transport target article is read by the reader, the loaded condition being satisfied when the identifier determines that the transport vehicle holds the transport target article.

2. The article transport facility according to claim 1, wherein
the transfer operation is performed by an operator, and
in response to the identifier determining that the transport vehicle is holding the transport target article incorrectly, the managing device informs the operator in the work area that the transport vehicle is holding the transport target article incorrectly.

3. The article transport facility according to claim 1, wherein
the managing device allows the reader to read the identification information in response to the transport vehicle stopping at the stop position, and
the managing device causes the transport vehicle to depart from the stop position in response to the reading completion condition, the loaded condition, and an elapsed time condition being satisfied, the elapsed time condition being satisfied when a predetermined set time has passed after the reading completion condition and the loaded condition are both satisfied.

4. The article transport facility according to claim 1, wherein
the transfer operation is performed by an operator,
the managing device further includes a departure operation unit operable by the operator in the work area, and
the managing device causes the transport vehicle to depart from the stop position in response to the reading completion condition, the loaded condition, and an operation condition being satisfied, the operation condition being satisfied when the departure operation unit has been operated.

5. The article transport facility according to any one of claims 1 to 4, wherein
the transport vehicle includes an article supporter configured to support the article,
the identifier includes an imaging device configured to image the article supporter in the transport vehicle stopped at the stop position, the identifier being configured to determine whether a foreign object other than the article is on the article supporter through image recognition of an imaging result provided from the imaging device, and
in response to the identifier determining that the foreign object is on the article supporter, the managing device prohibits the transport vehicle from departing.
